(19) Europäisches Patentamt / European Patent Office / Office européen des brevets

(11) EP 4 746 067 A1

(12) **EUROPEAN PATENT APPLICATION**

(43) Date of publication:
20.05.2026 Bulletin 2026/21

(21) Application number: 25209182.2

(22) Date of filing: 16.10.2025

(51) International Patent Classification (IPC):
H01M 4/139 (2010.01)    H01M 4/04 (2006.01)
B30B 3/04 (2006.01)    B29C 43/58 (2006.01)
B21B 38/10 (2006.01)    B29C 43/46 (2006.01)

(52) Cooperative Patent Classification (CPC):
H01M 4/0435; B21B 38/10; B29C 43/24;
B29C 43/28; B29C 43/46; B29C 43/58; B30B 3/04;
H01M 4/0404; H01M 4/139; B29C 2043/467

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 24.10.2024 US 202418926060

(71) Applicant: Tesla, Inc.
Austin, TX 78725 (US)

(72) Inventors:
• REN, Zihang
Austin, 78725 (US)
• EGGLESTON, Bonne
Austin, 78725 (US)
• WANG, Kaiping
Austin, 78725 (US)
• ZHANG, Chunlei
Austin, 78725 (US)

(74) Representative: Zacco Sweden AB
P.O. Box 5581
Löjtnantsgatan 21
114 85 Stockholm (SE)

(54) **REAL GAP AND MINIMUM GAP METHODS OF CALENDERING A DRY ELECTRODE FILM, AND SYSTEMS THEREOF**

(57) Calendering methods that accurately and/or precisely calender dry electrode films, and systems thereof, are described. The methods and systems are able to control the calendering nip and/or calendering distance between the calendering rollers with and/or without the presence of an electrode film and/or electrode powder mixture such that the variation of the calendering distance is reduced.

FIG. 1

**Description**

INCORPORATION BY REFERENCE TO ANY PRIORITY APPLICATIONS

This application claims the benefit of priority to U.S. Patent Application No. 18/926,060, entitled "REAL GAP AND MINIMUM GAP METHODS OF CALENDERING A DRY ELECTRODE FILM, AND SYSTEMS THEREOF," filed on October 24, 2024.

BACKGROUND

Field

The present disclosure related generally to calendering electrode films, particularly accurately calendering dry electrode films.

Description of the Related Art

Electrodes implemented in energy storage devices may be manufactured by wet and dry processes. While wet processed electrodes utilize slurry casting methods for forming and controlling the physical properties of electrode films, such methods may not be applicable to dry processed electrode films that may be formed on calender rolling systems. As such, improved methods and systems for manufacturing electrode films would be desirable.

SUMMARY

For purposes of summarizing the invention and the advantages achieved over the prior art, certain objects and advantages of the invention are described herein. Not all such objects or advantages may be achieved in any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

All of these embodiments are intended to be within the scope of the invention herein disclosed. These and other embodiments will become readily apparent to those skilled in the art from the following detailed description of the preferred embodiments having reference to the attached figures, the invention not being limited to any particular preferred embodiment(s) disclosed.

In a first aspect, a method of calendering a dry electrode film is disclosed. The method comprising rotating a first calender roll comprising a first roller surface and a first roller journal, wherein the first roller journal is positioned within a first bearing block assembly comprising a first bearing and a second bearing; rotating a second calender roll comprising a second roller surface, and a second roller journal, wherein the second roller journal is positioned within a second bearing block assembly comprising a third bearing and a fourth bearing, wherein a calendering distance between the first and second roller surfaces defines a calendering nip, and wherein the first and fourth bearings are non-corresponding bearings and the second and third bearings are non-corresponding bearings, calendering a dry electrode film within the calendering nip during rotation of each of the first and second calender rolls, wherein calendering exerts a deflection force on each of the first and second bearing blocks of about 25-450 KN, exerting a first push/pull force between the first and fourth bearings and a second push/pull force between the second and third bearings, thereby controlling an accuracy calendering distance to at most about 30 $\mu$m, wherein each of the first and second push/pull forces exerted are about 25-450 KN, and exiting the dry electrode film from the calender gap, wherein the first and second calender rolls continue to rotate subsequent to the dry electrode film exiting the calendering nip, and wherein the calendering distance subsequent to the dry electrode film exiting the calendering nip is at least about 1 $\mu$m.

In another aspect, a method of calendering a dry electrode film is disclosed. The method comprises rotating a first calender roll comprising a first roller surface and a first roller journal, wherein the first roller journal is positioned within a first bearing block assembly comprising a first bearing and a second bearing, rotating a second calender roll comprising a second roller surface and a second roller journal, wherein the second roller journal is positioned within a second bearing block assembly comprising a third bearing and a fourth bearing, wherein a calendering distance between the first and second roller surfaces defines a calendering nip, and wherein the first and fourth bearings are non-corresponding bearings and the second and third bearings are non-corresponding bearings, calendering a dry electrode film within the calendering nip during rotation of each of the first and second calender rolls, and exerting a first push/pull force between the first and fourth bearings and a second push/pull force between the second and third bearings, thereby controlling an accuracy of calendering distance to at most about 50 $\mu$m.

In some embodiments, the first push/pull force is a push force and the second push/pull force is a pull force. In some embodiments, the calendering distance is at least about 1 $\mu$m. In some embodiments, the calendering distance is a minimum distance without crashing the first calender roll and the second calender roll. In some embodiments, the accuracy of the calendering distance is about 1-30 $\mu$m. In some embodiments, the calendering exerts a deflection force on each of the first and second bearing blocks of about 25-450 KN. In some embodiments, each of the first and second push/pull forces exerted is about 25-450 KN. In some embodiments, the method further comprises the dry electrode film exiting the calendering nip. In some embodiments, the calendering distance subsequent to the dry electrode film exiting the calendering nip is at least about 1 μm. In some embodiments, the first and second calender rolls continue to rotate subsequent to the dry electrode film exiting the calendering nip. In some embodiments, the calendering distance prior to calendering the dry electrode film is at least about 1 μm. In some embodiments, the dry electrode film is self-supporting and substantially absent of solvent residue. In some embodiments, the dry electrode film comprises a fibrillized binder. In some embodiments, the dry electrode film comprises an active material.

In another aspect, a calendering system is disclosed. The calendering system comprises a first calender roll comprising a first roller surface and a first journal, a first bearing block assembly comprising a first bearing and a second bearing, wherein the first bearing comprises a first bearing position and the second bearing comprises a second bearing position, and wherein the first journal is disposed within the first bearing block assembly, a second calender roll comprising a second roller surface and a second journal, a second bearing block assembly comprising a third bearing and a fourth bearing, wherein the third bearing comprises a third bearing position and the fourth bearing comprises a fourth bearing position, and wherein the first and fourth bearings are non-corresponding bearings and the second and third bearings are non-corresponding bearings, wherein the second journal is disposed within the second bearing block assembly, a feedback control system configured to exert a first push/pull force between the first and fourth bearings and a second push/pull force between the second and third bearings, and a controller in electrical communication with the feedback control system, wherein a calendering distance between the first and second roller surfaces defines a calendering nip.

In some embodiments, the feedback control system comprises a hydraulic system, a servo motor system, a magnetic levitation system, a pneumatic system, and combinations thereof. In some embodiments, the system further comprises a bearing sensor in electrical communication with the controller and configured to detect the first and second bearing positions. In some embodiments, the bearing sensor comprises a mechanical sensor, an optical sensor, an electromagnetic sensor, a capacitance sensor, or combinations thereof. In some embodiments, the system further comprises a nip sensor in electrical communication with the controller and configured to detect the calendering distance. In some embodiments, the nip sensor comprises a mechanical sensor, an optical sensor, an electromagnetic sensor, a capacitance sensor, a mathematical model, or combinations thereof.

BRIEF DESCRIPTION OF THE DRAWINGS

The present inventions are described with reference to the accompanying drawings, in which like reference characters reference like elements, and wherein:

FIG. 1 is a schematic illustration of a roller system, according to some embodiments.
FIG. 2 is a flow chart of a method of calendering a dry electrode film, according to some embodiments.
FIG. 3A is a graph showing experimental stiffness and force results of a calender bearing, according to some embodiments.
FIG. 3B is a graph showing experimental compression and force results of a calender bearing, according to some embodiments.
FIG. 4A is a graph showing experimental leverage and pull force results of a calender bearing, according to some embodiments.
FIG. 4B is another graph showing experimental leverage and pull force results of a calender bearing, according to some embodiments.
FIG. 4C is a graph showing experimental leverage and push force results of a calender bearing, according to some embodiments.
FIG. 4D is another graph showing experimental leverage and push force results of a calender bearing, according to some embodiments.
FIG. 5 are bar graphs showing experimental improvement of calendering nip accuracy under various pull and push force operating conditions, according to some embodiments.

DETAILED DESCRIPTION

The following detailed description of certain embodiments presents various descriptions of specific embodiments. However, the innovations described herein can be embodied in a multitude of different ways, for example, as defined and covered by the claims. In this description, reference is made to the drawings where like reference numerals and/or terms can indicate identical or functionally similar elements. It will be understood that elements illustrated in the figures are not necessarily drawn to scale. Moreover, it will be understood that certain embodiments can include more elements than illustrated in a drawing and/or a subset of the elements illustrated in a drawing. Further, some embodiments can incorporate any suitable combination of features from two or more drawings. The headings are provided for convenience only and do not impact the scope or meaning of the claims.

Calendering methods that accurately and/or precisely calender dry electrode films, and systems thereof, are described. The methods and systems are able to control the calendering nip and/or calendering distance between the calendering rollers with and/or without the presence of an electrode film and/or electrode powder mixture such that the variation of the calendering distance is reduced. In some embodiments, methods and systems are able to control the calendering nip and/or calendering distance between the calendering rollers with and/or without the presence of an electrode film and/or electrode powder mixture such that the calendering distance is prevented from reducing to zero thereby crashing the calender rollers into each other. In some embodiments, the calendering distance between the calendering rollers is a minimum distance when the distance between the two calendering rollers is the smallest allowable space between the two calendering rollers before they crash into each other.

Such methods and systems may enable accurate control of dry electrode film thicknesses, which is not able to be adjusted subsequent to the calendering process. Furthermore, the methods and systems described may enable higher throughput and manufacturing efficiencies by enabling transfer of the electrode film between calender rollers without the need to start and stop calender rollers due to the presence or absence of the electrode film between nips.

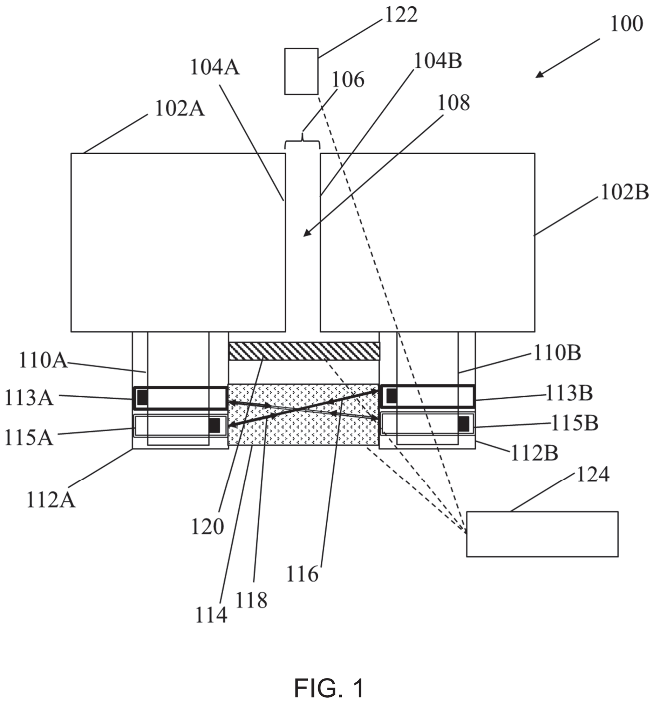

FIG. 1 is a schematic illustration of a roller system 100. The roller system 100 includes a first calender roll 102A and a second calender roll 102B adjacent to each other. The first calender roll 102A includes a first roller surface 104A and a first roller journal 110A, and the second calender roll 102B includes a second roller surface 104B and a second roller journal 110B. The calendering distance 106 between the first roller surface 104A and the second roller surface 104B defines the calendering nip 108. The first roller journal 110A is disposed within a first bearing block assembly 112A at a first bearing position, and the second roller journal 110B is disposed within a second bearing block assembly 112B at a second bearing position. The first bearing block assembly 112A includes a first bearing 113A and a second bearing 115A, and the second bearing block assembly 112B includes a third bearing 113B and a fourth bearing 115B. The first bearing 113A and the third bearing 113B are corresponding bearings in that they contact and assert forces on the same, similar or substantially similar surfaces of the first and second roller journals 110A and 110B, respectively, and the second bearing 115A and the fourth bearing 115B are corresponding bearings in that they contact and assert forces on the same, similar or substantially similar surfaces of the first and second roller journals 110A and 110B, respectively. The first bearing 113A and the fourth bearing 115B are non-corresponding bearings in that they contact and assert forces on different or substantially different surfaces of the first and second roller journals 110A and 110B, respectively, and the second bearing 115A and the third bearing 113B are non-corresponding bearings in that they contact and assert forces on different or substantially different surfaces of the first and second roller journals 110A and 110B, respectively. A feedback control system 114 is shown positioned between the first bearing block assembly 112A and the second bearing block assembly 112B, and is shown exerting a first push/pull force 116 and a second push/pull force 118 on each of the first bearing block assembly 112A and the second bearing block assembly 112B. Specifically, the feedback control system 114 is configured to apply the first push/pull force 116 to non-corresponding first and fourth bearings 113A and 115B, and configured to apply the second push/pull force 116 to non-corresponding second and third bearings 113B and 115A. A bearing sensor 120 is positioned and configured to detect and/or measure the positions (e.g., deflection) of and/or forces (e.g., push, pull) exerted on the first bearing block assembly 112A and the second bearing block assembly 112B, specifically the first, second third and fourth bearings 113A, 115A, 113B and 115B. The bearing sensor 120 is positioned and configured to indirectly detect and/or measure the calendering distance 106. A nip sensor 122 is positioned and configured to directly detect and/or measure the calendering distance 106. A controller 124 is in electrical communication with the feedback control system 114 and configured to control the push force 116 and/or pull force 118, is in electrical communication with the bearing sensor, and is in electrical communication with the nip sensor.

In some embodiments, the roll system includes one or more additional calender rolls and additional bearing block assemblies. In some embodiments, the one or more additional calender rolls and bearing block assemblies may be upstream and/or downstream of the roller system 100 described in FIG. 1, and may form additional nips with the first and/or second calender rolls and/or with the additional calender rolls. In some embodiments, a dispensing apparatus is positioned over a nip and configured to dispense a dry electrode film mixture into a nip to form a dry electrode. In some embodiments, the calender roll is configured to carry the dry electrode on its surface while rotating to a downstream nip. In some embodiments, the roll system is configured to laminate the dry electrode film to a current collector to form a dry electrode.

In some embodiments, a feedback control system comprises a hydraulic system, a servo motor system, a magnetic levitation system, a pneumatic system, and combinations thereof. In some embodiments, a feedback control system is a system that is capable of exerting a push force and/or a pull force to adjust the gap distance between two calender rollers based on the communication from the controller. In some embodiments, a bearing sensor and/or a nip sensor comprises a mechanical sensor, an optical sensor, an electromagnetic sensor, a capacitance sensor, or combinations thereof. In some embodiments, an optical sensor comprises a laser sensor. In some embodiments, a nip sensor comprises a model for determining the calendering distance.

In some embodiments, a bearing sensor is configured for measurement of the calender nip gap. In some embodiments, the bearing sensor and/or nip sensor are in electrical communication with the feedback control system through a controller. In some embodiments, a bearing sensor comprises a model for determining the calendering distance. In some embodiments, the model is a linear regression model or nonlinear parametric model of estimating bearing deflection from pull/push forces and bearing stiffness. In some embodiment, the equation for the model includes

$$g_r = g_m - g_d$$

    $g_r$ = roller surface to roller surface distance
    $g_m$ = measured value from bearing sensor
    $g_d$ = estimated bearing defection from pull and push forces

In some embodiments, the bearing sensor may be configured to provide a feedback signal to the control system to improve control of the calendering distance during operation of the roller system.

A bearing block assembly includes a bearing, wherein the journal is configured to be positioned within and/or held by the bearing. In some embodiments, the bearing is configured to contact and/or assert a force against the journal to hold the calender roll in place and/or counter deflection of the calender roll (e.g., deflection due to material being calendered by the roller system). In some embodiments, the bearing block assembly includes 1, 2, 3, 4, 5, 6, 7, 8, 9 or 10 bearings. In some embodiments, the bearing block assembly includes a plurality of bearings, wherein some of the bearings are configured to assert a force on the journal from different directions (e.g., directions that counter each other) to reduce deflection and/or calendering distance variation. In some embodiments, a bearing may be configured to contact and/or assert a force against the journal at an angle relative to normal of, or of about, 0°, 23°, 45°, 77°, 90°, 112°, 135°, 158°, 180°, 202°, 225°, 247°, 270°, 292°, 315° or 337°, or any range of values therebetween. Bearings in the same and/or different bearing block assemblies with the same or substantially similar contact and/or force angles are corresponding bearings. Bearings in the same and/or different bearing block assemblies with different or substantially different contact and/or force angles are non-corresponding bearings

Bearing block assemblies (e.g., adjacent bearing block assemblies) and their bearings may be in physical communication with each other through a feedback control system. In some embodiments, the feedback control system is configured to assert a push force and/or a pull force (i.e., push/pull force) between some or all non-corresponding bearings. In some embodiments, the feedback control system is configured to concurrently assert a push force and a pull force and/or alternate between applying a push or a pull force between some or all non-corresponding bearings. In some embodiments, the feedback control system is configured to assert a push force between a first set of non-corresponding bearings, and a pull force between a second set of non-corresponding bearings.

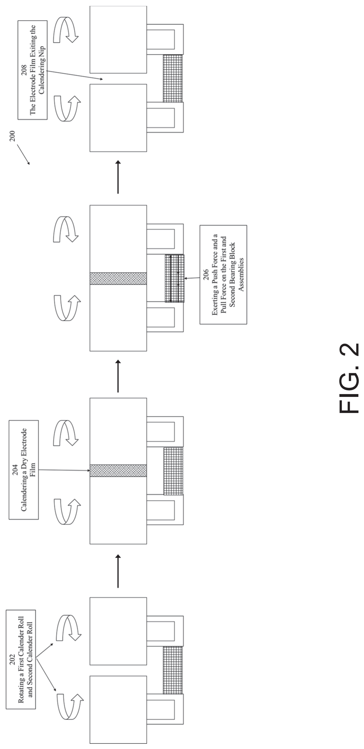

FIG. 2 is a flow chart of a method 200 of calendering a dry electrode film. The method 200 includes rotating 202 a first calender roll and second calender roll, calendering 204 a dry electrode film, exerting 206 a push force and a pull force on the first and second bearing block assemblies, and the electrode film exiting 208 from the calendering nip. The first and second calendering rolls are shown rotating throughout the method 200, and a void is shown existing between the first and second calendering roll surfaces.

In some embodiments, the calendering distance prior to, concurrent with and/or subsequent to the electrode film entering and/or exiting the nip is, is about, is at least, or is at least about, 1 μm, 2 μm, 3 μm, 5 μm, 10 μm, 15 μm, 20 μm, 25 μm, 30 μm, 40 μm, 50 μm, 60 μm, 75 μm, 100 μm, 125 μm, 150 μm, 175 μm, 200 μm, 250 μm, 300 μm, 400 μm, 500 μm, 600 μm, 700 μm, 800 μm, 900 μm or 1000 μm, or any range of values therebetween. In some embodiments, calendering exerts a deflection force on the first and/or second bearing blocks of, of about, of at least, or of at least about, 5 KN, 10 KN, 15 KN, 20 KN, 25 KN, 30 KN, 40 KN, 50 KN, 60 KN, 75 KN, 100 KN, 125 KN, 150 KN, 175 KN, 200 KN, 250 KN, 300 KN, 350 KN, 400 KN, 450 KN, 500 KN, 550 KN, 600 KN or 700 KN, or any range of values therebetween. In some embodiments, a push and/or pull force is exerted on the first and/or second bearing blocks of, of about, of at least, or of at least about, 5 KN, 10 KN, 15 KN, 20 KN, 25 KN, 30 KN, 40 KN, 50 KN, 60 KN, 75 KN, 100 KN, 125 KN, 150 KN, 175 KN, 200 KN, 250 KN, 300 KN, 350 KN, 400 KN, 450 KN, 500 KN, 550 KN, 600 KN or 700 KN, or any range of values therebetween. In some embodiments, calendering of the electrode film is performed with a calendering distance accuracy of, of about, of at least, or of at least about, 1 μm, 2 μm, 3 μm, 4 μm, 5 μm, 8 μm, 10 μm, 13 μm, 15 μm, 17 μm, 20 μm, 22 μm, 25 μm, 30 μm, 40 μm, 50 μm, 60 μm, or any range of values therebetween. In some embodiments, the calendering distance accuracy of calendering of the electrode film is performed at a deflection force of, of about, of at most, of at most about, of at least, or of at least about, 5 KN, 10 KN, 15 KN, 20 KN, 25 KN, 30 KN, 40 KN, 50 KN, 60 KN, 75 KN, 100 KN, 125 KN, 150 KN, 175 KN, 200 KN, 250 KN, 300 KN, 350 KN, 400 KN, 450 KN, 500 KN, 550 KN, 600 KN or 700 KN, or any range of values therebetween. In some embodiments, the first and second calender rolls continue to rotate prior to, concurrently with and/or subsequent to the dry electrode film entering and/or exiting the calendering nip.

Electrode Materials, Electrode Films, Electrodes and Energy Storage Devices

In some embodiments, an electrode film is a cathode electrode film or an anode electrode film. An active material (e.g., cathode active material, anode active material) may be used in the preparation of an electrode film and/or electrode for an energy storage device. In some embodiments, an electrode comprises a current collector and an electrode film.

In some embodiments, the active material is a cathode active material. In some embodiments, the cathode active material is selected from at least one of a metal oxide, metal sulfide, a sulfur-carbon composite, a lithium metal oxide, and a material including sulfur. In some embodiments, the cathode active material is selected from lithium iron phosphate (i.e., $LiFePO_4$ or "LFP"), lithium manganese iron phosphate (e.g., $LiMn_{0.6}Fe_{0.4}PO_4$ or "LMFP"), lithium nickel manganese cobalt oxide (i.e., $LiNi_xMn_yCo_{1-x-y}O_2$ or "NMC"), lithium nickel cobalt aluminum oxide (i.e., $LiNi_xCo_yAl_zO_2$ or "NCA"), lithium manganese oxide ("LMO"), lithium nickel manganese oxide ("LNMO"), lithium cobalt oxide ("LCO"), lithium titanate ("LTO"), or combinations thereof. In some embodiments, the cathode active material includes at least two of LFP, LMFP, NMC, NCA, LMO, LNMO, LCO, LTO, and combinations thereof. In some embodiments, the cathode active material is an iron phosphate-based active material. In some embodiments, iron phosphate-based active materials include $LiFePO_4$ (i.e., "lithium iron phosphate" and "LFP") and $LiMn_{1-x}Fe_xPO_4$ (i.e., "lithium manganese iron phosphate" and "LMFP") (e.g., $LiMn_{0.6}Fe_{0.4}PO_4$ or $LiMn_{0.8}Fe_{0.2}PO_4$). In some embodiments, the iron phosphate-based active material includes LFP. In some embodiments, the iron phosphate-based active material includes an LMFP. In some embodiments, the iron phosphate-based active material includes an LFP and/or an LMFP.

In some embodiments, the active material is an anode active material. In some embodiments, anode active materials can include, for example, an insertion material (such as carbon, graphite, and/or graphene), an alloying/dealloying material (such as silicon, silicon oxide, tin, and/or tin oxide), a metal alloy or compound (such as Si-Al, and/or Si-Sn), and/or a conversion material (such as manganese oxide, molybdenum oxide, nickel oxide, and/or copper oxide). The anode active materials can be used alone or mixed together to form multi-phase materials (such as Si-C, Sn-C, SiOx-C, SnOx-C, Si-Sn, Si-SiOx, Sn-SnOx, Si-SiOx-C, Sn-SnOx-C, Si-Sn-C, SiOx-SnOx-C, Si-SiOx-Sn, or Sn-SiOx-SnOx.). Anode active materials include common natural graphite, synthetic or artificial graphite, surface modified graphite, spherical-shaped graphite, flake-shaped graphite and blends or combinations of these types of graphite, metallic elements and its compound as well as metal-C composite for anode.

In some embodiments, the electrode film comprises the active material in an amount of, of about, of at least, or at least about, 70 wt.%, 75 wt.%, 80 wt.%, 85 wt.%, 86 wt.%, 87 wt.%, 88 wt.%, 89 wt.%, 90 wt.%, 91 wt.%, 92 wt.%, 93 wt.%, 94 wt.%, 95 wt.%, 96 wt.%, 97 wt.%, 98 wt.%, 98.5 wt.%, 99 wt.%, 99.5 wt.%, 99.8 wt.% or 99.9 wt.%, or any range of values therebetween.

In some embodiments, an electrode film comprises a carbon material configured to reversibly intercalate lithium ions. In some embodiments, the lithium intercalating carbon is selected from a graphitic carbon, graphite, hard carbon, soft carbon and combinations thereof. For example, the electrode film of the electrode can include a binder material, one or more of graphitic carbon, graphite, graphene-containing carbon, hard carbon and soft carbon, and an electrical conductivity promoting material. In some embodiments, an electrode is mixed with lithium metal and/or lithium ions. In some embodiments, the electrode comprises the carbon material in a total amount of, of about, of at most, or at most about, 20 wt.%, 15 wt.%, 10 wt.%, 9 wt.%, 8 wt.%, 7 wt.%, 6 wt.%, 5 wt.%, 4 wt.%, 3 wt.%, 2 wt.%, 1 wt.%, or any range of values therebetween.

In some embodiments, an electrode film includes a conductive additive. In some embodiments, the conductive additive may comprise a conductive carbon additive, such as a carbon black. In some embodiments, the conductive additive may comprise a conductive carbon additive. In some embodiments, the conductive carbon additive comprises carbon black, carbon nanotubes, such as single-walled carbon nanotubes (SWCNTs) and multi-walled carbon nanotubes (MWCNTs). In some embodiments, the electrode film comprises the conductive additive in a total amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, or any range of values therebetween. In some embodiments, each of the conductive additive is in an amount of, of about, of at most, or at most about, 10 wt.%, 9 wt.%, 8 wt.%, 7 wt.%, 6 wt.%, 5 wt.%, 4 wt.%, 3 wt.%, 2 wt.%, 1 wt.%, 0.5 wt.%, 0.25 wt.%, 0.1 wt.%, of the electrode film, or any range of values therebetween. In some embodiments, the conductive additive is carbon black.

In some embodiments, the electrode film includes a binder. In some embodiments, binders can include polytetrafluoroethylene (PTFE), a polyolefin, polyalkylenes, polyethers, styrene-butadiene, co-polymers of polysiloxanes and polysiloxane, branched polyethers, polyvinylethers, a carboxymethylcellulose (CMC), co-polymers thereof, and/or combinations thereof. In some embodiments, the polyolefin can include polyethylene (PE), polypropylene (PP), polyvinylidene fluoride (PVDF), co-polymers thereof, and/or combinations thereof. For example, the binder can include polyvinylene chloride, poly(phenylene oxide) (PPO), polyethylene-block-poly(ethylene glycol), poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or combinations thereof. In some embodiments, the binder may include a thermoplastic. In some embodiments, the binder comprises a fibrillizable and/or fibrillized polymer. In certain embodiments, the binder comprises, consists essentially, or consists of a single fibrillizable and/or fibrillized binder, such as PTFE. In some embodiments, the electrode film includes, includes about, includes at most, or includes at most about, 1 wt.%, 2 wt.%, 3 wt.%, 4 wt.%, 5 wt.%, 6 wt.%, 7 wt.%, 8 wt.%, 9 wt.%, 10 wt.%, or any range of values therebetween, of a binder.

In some embodiments, the electrode film can be a wet processed electrode film. In some embodiments, the electrode film is prepared by a wet or slurry-based electrode fabrication process. In some embodiments, the electrode film of the present disclosure can be a dry processed electrode film. In some embodiments, the electrode film is prepared by a dry electrode fabrication process. As used herein, a dry electrode fabrication process can refer to a process in which no or substantially no solvents are used to form a dry electrode film. For example, components of the active layer or electrode film, including carbon materials and binders, may comprise, consist of, or consist essentially of dry particles. The dry particles for forming the active layer or electrode film may be combined to provide a dry particle active layer mixture. In some embodiments, the active layer or electrode film may be formed from the dry particle active layer mixture such that weight percentages of the components of the active layer or electrode film and weight percentages of the components of the dry particles active layer mixture are substantially the same. In some embodiments, the active layer or electrode film formed from the dry particle active layer mixture using the dry fabrication process may be free from, or substantially free from, any processing additives such as solvents and solvent residues resulting therefrom. In some embodiments, the resulting active layer or electrode films are self-supporting films formed using the dry process from the dry particle mixture. In some embodiments, the resulting active layer or electrode films are free-standing films formed using the dry process from the dry particle mixture. A process for forming an active layer or electrode film can include fibrillizing the fibrillizable binder component(s) such that the film comprises fibrillized binder. In further embodiments, a free-standing active layer or electrode film may be formed in the absence of a current collector. In still further embodiments, an active layer or electrode film may comprise a fibrillized polymer matrix such that the film is self-supporting. It is thought that a matrix, lattice, or web of fibrils can be formed to provide mechanical structure to the electrode film.

In some embodiments, an electrode film is disposed on a current collector to form an electrode. In some embodiments, a current collector can include a metallic material, such as a material comprising aluminum, nickel, copper, combinations of the foregoing. In some embodiments, a current collector comprises a pure metal. In some embodiments, a current collector comprises a metallized polymer film or metal coated polymer film. In some embodiments, the polymer comprises polyethylene terephthalate (PET), biaxially oriented polypropylene (BOPP) or a combination thereof. In some embodiments, the metal coating comprises aluminum. In some embodiments, coating the final electrode film mixture comprises forming a uniform electrode film mixture coating. In some embodiments, the current collector comprises a thickness of, of about, of at most, or at most about, 200 $\mu$m, 100 $\mu$m, 50 $\mu$m, 40 $\mu$m, 30 $\mu$m, 20 $\mu$m, 15 $\mu$m, 10 $\mu$m, 5 $\mu$m, or any range of values therebetween.

In some embodiments, an electrode is a double-sided electrode. In some embodiments, the double-sided electrode includes two electrode films. In some embodiments, the double-sided electrode may include a current collector, a top electrode film, and a bottom electrode film. In some embodiments, each of the two electrode films can have any suitable shape, size and thickness.

In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode.

An electrode assembly includes a cathode, an anode, and a separator positioned between the anode and cathode. In some embodiments, the electrode assembly is a wound electrode (i.e., rolled electrode) assembly (e.g., a jelly roll). In some embodiments, the energy storage device is selected from the group consisting of a cylindrical energy storage device, a stacked prismatic energy storage device, and a spiral-wound prismatic energy storage device.

The electrode disclosed herein may be used for an energy storage device. In some embodiments, the energy storage device comprises a separator, an anode electrode, the cathode electrode, an electrolyte, and a housing, wherein the electrolyte, separator, anode electrode and cathode electrode are disposed within the housing and the separator is positioned between the anode and cathode electrodes. In some embodiments, an energy storage device is formed by placing an electrolyte, a separator, an anode electrode and the cathode electrode described herein within a housing, wherein the separator is placed between the anode electrode and the cathode electrode. In some embodiments, the energy storage device comprises an anode electrode positioned between two cathode electrodes. In some embodiments, the anode electrode and/or the cathode electrode comprises a shaped electrode film. In some embodiments, the energy storage device is a lithium-ion battery. In some embodiments, the energy storage devices may be a battery, capacitor, capacitor-battery hybrid, fuel cell, or combinations thereof. In some embodiments, the energy storage system or energy storage device may be used for electromobility. In some embodiments, the energy storage device may be used in motor vehicles, including hybrid electric vehicles (HEV), plug-in hybrid electric vehicles (PHEV), and/or electric vehicles (EV). In some embodiments, the energy storage device used in motor vehicles, including hybrid electric vehicles (HEV), plug-in hybrid electric vehicles (PHEV), and/or electric vehicles (EV) reduces greenhouse gas emissions.

In some embodiments, the energy storage device is charged with a suitable lithium-containing electrolyte. For example, the energy storage device can include a lithium salt, and a solvent, such as a non-aqueous or organic solvent. Generally, the lithium salt includes an anion that is redox stable. In some embodiments, the anion can be monovalent. In some embodiments, a lithium salt can be selected from lithium hexafluorophosphate ($LiPF_6$), lithium bis(trifluoromethanesulfonyl) imide (LiFSI), lithium tetrafluoroborate ($LiBF_4$), lithium perchlorate ($LiClO_4$), lithium bis(trifluoromethansulfonyl)imide ($LiN(SO_2CF_3)_2$), lithium trifluoromethansulfonate ($LiSO_3CF_3$), lithium bis(oxalato)borate ($LiB(C_2O_4)_2$), lithium bis(fluorosulfonyl)imide ($LiN(SO_2F)_2$, lithium difluoro(oxalato)borate ($LiC_2BF_2O_4$) and combinations thereof. In some embodiments, the electrolyte can include a quaternary ammonium cation and an anion selected from the group consisting of hexafluorophosphate, tetrafluoroborate and iodide. In some embodiments, the salt concentration can be about 0.1 mol/L (M) to about 5 M, about 0.2 M to about 3 M, or about 0.3 M to about 2 M. In further embodiments, the salt concentration of the electrolyte can be about 0.7 M to about 2 M. In certain embodiments, the salt concentration of the electrolyte can be about 0.2 M, about 0.3 M, about 0.4 M, about 0.5 M, about 0.6 M, about 0.7 M, about 0.8 M. about 0.9 M, about 1 M, about 1.1 M, about 1.2 M, 1.3M, 1.4M, 1.5M or values therebetween.

In some embodiments, an energy storage device can include a liquid solvent. The solvent need not dissolve every component, and need not completely dissolve any component, of the electrolyte. In further embodiments, the solvent can be an organic solvent. In some embodiments, a solvent can include one or more functional groups selected from dioxathiolane (e.g., 1,3,2-dioxathiolane-2,2-dioxide (i.e., "DTD")), carbonates, ethers and/or esters. In some embodiments, the solvent can comprise a carbonate. In further embodiments, the carbonate can be selected from cyclic carbonates such as, for example, ethylene carbonate (EC), propylene carbonate (PC), vinyl ethylene carbonate (VEC), vinylene carbonate (VC), fluoroethylene carbonate (FEC), and combinations thereof, or acyclic carbonates such as, for example, dimethyl carbonate (DMC), diethyl carbonate (DEC), ethyl methyl carbonate (EMC), 1,3-propene sultone (PRS), and combinations thereof. In some embodiments, the solvent can comprise an ester. In some embodiments, the ester is selected from methyl acetate (MA), methyl propionate (MP), ethyl acetate (EA), methyl butyrate (MB), and combinations thereof. In some embodiments, the solvent may include EC, PC, VEC, VC, FEC, DMC, DEC, EMC, MA, MP, EA, MB, and combinations thereof. In some embodiments, the solvent may include EC, DMC, DEC, EMC, MA, and combinations thereof. In some embodiments, the solvent may include EC, DMC, EMC, and combinations thereof. In some embodiments, the solvent may include a ratio of EC:DMC:EMC of 10-30:0-90:0-70.

In some embodiments, one or more solvents can be used at a concentration of, of about, of at least, or at least about, 30 wt. %, 35 wt. %, 40 wt. %, 45 wt. %, 50 wt. %, 55 wt. %, 60 wt. %, 65 wt. %, 70 wt. %, 75 wt. %, 80 wt. %, 85 wt. % or 90 wt. %, or any range of values therebetween. In some embodiments, solvents are utilized as additives in the electrolyte system, and can be used at a concentration of, of about, of at most, or at most about, 0.1 wt. %, 0.2 wt. %, 0.3 wt. %, 0.4 wt. %, 0.5 wt. %, 0.6 wt. %, 0.7 wt. %, 0.8 wt. %, 0.9 wt. %, 1 wt. %, 1.1 wt. %, 1.2 wt. %, 1.3 wt. %, 1.4 wt. %, 1.5 wt. %, 1.6 wt. %, 1.7 wt. %, 1.8 wt. %, 1.9 wt. %, 2 wt. %, 2.1 wt. %, 2.2 wt. %, 2.3 wt. %, 2.4 wt. %, 2.5 wt. %, 2.6 wt. %, 2.7 wt. %, 2.8 wt. %, 2.9 wt. %, 3 wt. %, 4 wt. %, 5 wt. %, 6 wt. %, 7 wt. %, 8 wt. %, 9 wt. % or 10 wt. %, or any range of values therebetween. For example, in some embodiments, the amount of an additive in the electrolyte is or is about in any one of the following ranges: 0.1-10 wt.%, 1-6 wt.%, 2-5 wt.%, 0.1-6 wt.%, 2-8 wt.%, 2-3 wt.%, or 1-4 wt.%.

In some embodiments, an energy storage device is created such that one electrode (e.g., anode) is larger than and overhangs the other electrode (e.g., cathode). One electrode may overhang the other in the winding direction and/or non-winding direction of the electrode assembly. Such electrode overhangs may avoid yield losses. In some embodiments where there is no, or is substantially no, overlap and/or intermingling of the separator and the shaped electrode film (e.g., cathode electrode film), the boundary of the shaped electrode film is easier to identify and therefore improves the ability to form a counter electrode (e.g., anode electrode) with an overhang.

EXAMPLES

Example embodiments of the present disclosure, including processes, materials and/or resultant products, are described in the following examples.

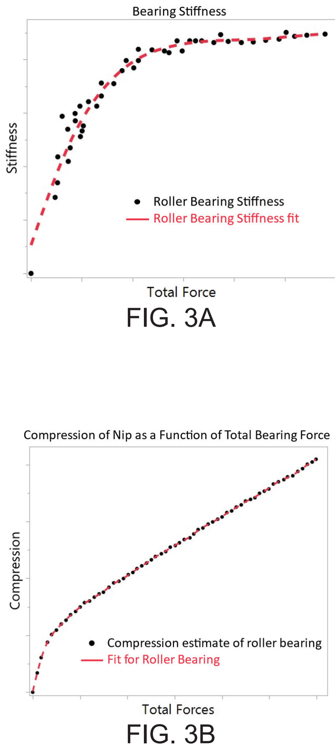

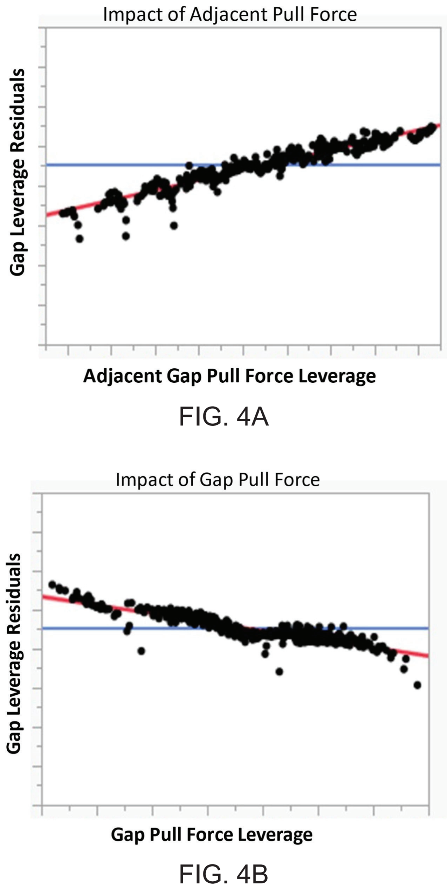

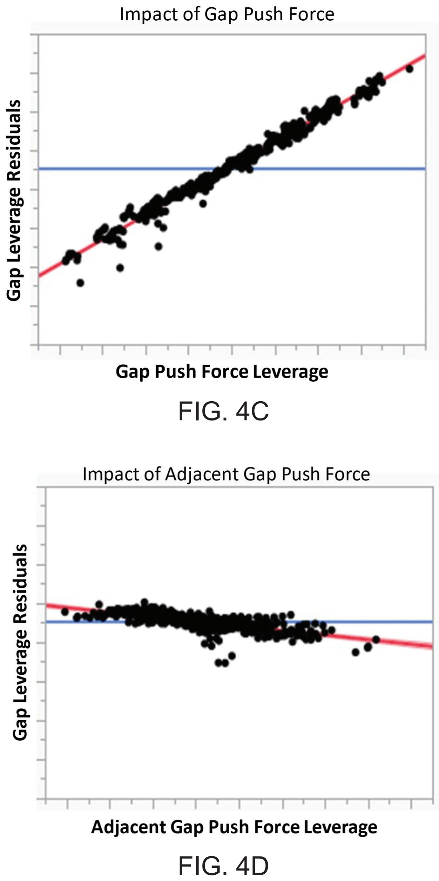

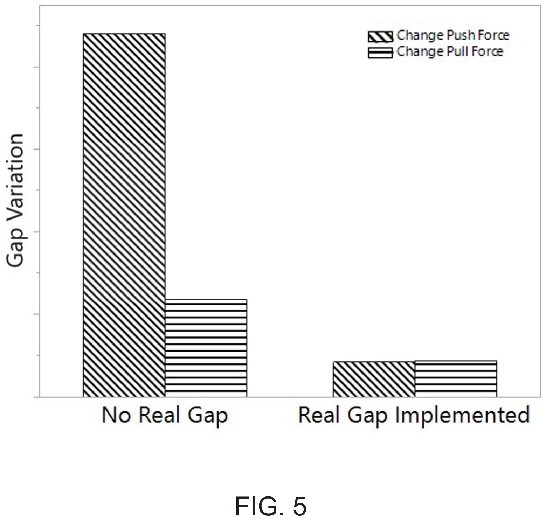

Adjacent calenders of a calendering system were touching and in force control mode, and the push and pull forces on each bearing were varied with stiffness, compression and leverages recorded for each bearing. FIG. 3A is a graph showing the stiffness and force results, FIG. 3B is a graph showing the compression and force results, FIGS. 4A-4D are graphs showing the leverage and push/pull force results. FIG. 5 shows bar graphs with the experimental gap variations under various pull and push force operating conditions. FIGS. 3A-5 demonstrate that systems and methods experimentally tested are able to control the calendering distance of the rollers within 30 μm over a wide force range of 25-450 KN.

While certain embodiments have been described, these embodiments have been presented by way of example only, and are not intended to limit the scope of the disclosure. Indeed, the novel methods and systems described herein may be embodied in a variety of other forms. Furthermore, various omissions, substitutions and changes in the systems and methods described herein may be made without departing from the spirit of the disclosure. The accompanying claims and their equivalents are intended to cover such forms or modifications as would fall within the scope and spirit of the disclosure.

Features, materials, characteristics, or groups described in conjunction with a particular aspect, embodiment, or example are to be understood to be applicable to any other aspect, embodiment or example described in this section or elsewhere in this specification unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The protection is not restricted to the details of any foregoing embodiments. The protection extends to any novel one, or any novel combination, of the features disclosed in this specification (including any accompanying claims, abstract and drawings), or to any novel one, or any novel combination, of the steps of any method or process so disclosed.

Furthermore, certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a claimed combination can, in some cases, be excised from the combination, and the combination may be claimed as a subcombination or variation of a subcombination.

Moreover, while operations may be depicted in the drawings or described in the specification in a particular order, such operations need not be performed in the particular order shown or in sequential order, or that all operations be performed, to achieve desirable results. Other operations that are not depicted or described can be incorporated in the example methods and processes. For example, one or more additional operations can be performed before, after, simultaneously, or between any of the described operations. Further, the operations may be rearranged or reordered in other implementations. Those skilled in the art will appreciate that in some embodiments, the actual steps taken in the processes illustrated and/or disclosed may differ from those shown in the figures. Depending on the embodiment, certain of the steps described above may be removed, others may be added. Furthermore, the features and attributes of the specific embodiments disclosed above may be combined in different ways to form additional embodiments, all of which fall within the scope of the present disclosure. Also, the separation of various system components in the implementations described above should not be understood as requiring such separation in all implementations, and it should be understood that the described components and systems can generally be integrated together in a single product or packaged into multiple products. For example, any of the components for an energy storage system described herein can be provided separately, or integrated together (e.g., packaged together, or attached together) to form an energy storage system.

For purposes of this disclosure, certain aspects, advantages, and novel features are described herein. Not necessarily all such advantages may be achieved in accordance with any particular embodiment. Thus, for example, those skilled in the art will recognize that the disclosure may be embodied or carried out in a manner that achieves one advantage or a group of advantages as taught herein without necessarily achieving other advantages as may be taught or suggested herein.

Conditional language, such as "can," "could," "might," or "may," unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without user input or prompting, whether these features, elements, and/or steps are included or are to be performed in any particular embodiment.

Conjunctive language such as the phrase "at least one of X, Y, and Z," unless specifically stated otherwise, is otherwise understood with the context as used in general to convey that an item, term, etc. may be either X, Y, or Z. Thus, such conjunctive language is not generally intended to imply that certain embodiments require the presence of at least one of X, at least one of Y, and at least one of Z.

Language of degree used herein, such as the terms "approximately," "about," "generally," and "substantially" as used herein represent a value, amount, or characteristic close to the stated value, amount, or characteristic that still performs a desired function or achieves a desired result. For example, the terms "approximately," "about," "generally," and "substantially" may refer to an amount that is within less than 10% of, within less than 5% of, within less than 1% of, within less than 0.1% of, and within less than 0.01% of the stated amount, depending on the desired function or desired result.

The scope of the present disclosure is not intended to be limited by the specific disclosures of preferred embodiments in this section or elsewhere in this specification, and may be defined by claims as presented in this section or elsewhere in this specification or as presented in the future. The language of the claims is to be interpreted broadly based on the language employed in the claims and not limited to the examples described in the present specification or during the prosecution of the application, which examples are to be construed as non-exclusive.

The headings provided herein, if any, are for convenience only and do not necessarily affect the scope or meaning of the devices and methods disclosed herein.

## Claims

1. A method of calendering a dry electrode film, comprising:

    rotating a first calender roll comprising a first roller surface and a first roller journal, wherein the first roller journal is positioned within a first bearing block assembly comprising a first bearing and a second bearing;
    rotating a second calender roll comprising a second roller surface and a second roller journal, wherein the second roller journal is positioned within a second bearing block assembly comprising a third bearing and a fourth bearing, wherein a calendering distance between the first and second roller surfaces defines a calendering nip, and wherein the first and fourth bearings are non-corresponding bearings and the second and third bearings are non-corresponding bearings;
    calendering a dry electrode film within the calendering nip during rotation of each of the first and second calender rolls; and
    exerting a first push/pull force between the first and fourth bearings and a second push/pull force between the second and third bearings, thereby controlling an accuracy of calendering distance to at most about 50 $\mu$m.

2. The method of Claim 1, wherein the first push/pull force is a push force and the second push/pull force is a pull force.

3. The method of Claim 1 or 2, wherein the calendering distance is at least about 1 $\mu$m.

4. The method of any one of Claims 1-3, wherein the calendering distance is a minimum distance without crashing the first calender roll and the second calender roll.

5. The method of any one of Claims 1-4, wherein the accuracy of the calendering distance is about 1-30 $\mu$m.

6. The method of any one of Claims 1-5, wherein the calendering exerts a deflection force on each of the first and second bearing blocks of about 25-450 KN.

7. The method of any one of Claims 1-5, wherein each of the first and second push/pull forces exerted is about 25-450 KN.

8. The method of any one of Claims 1-7, further comprising the dry electrode film exiting the calendering nip, preferably wherein the calendering distance subsequent to the dry electrode film exiting the calendering nip is at least about 1 $\mu$m.

9. The method of Claim 8, wherein the first and second calender rolls continue to rotate subsequent to the dry electrode film exiting the calendering nip.

10. The method of Claim 8 or 9, wherein the calendering distance prior to calendering the dry electrode film is at least about 1 $\mu$m.

11. The method of any one of Claims 1-10, wherein the dry electrode film is self-supporting and substantially absent of solvent residue, and/or wherein the dry electrode film comprises a fibrillized binder, and/or wherein the dry electrode film comprises an active material.

12. A calendering system, comprising:

    a first calender roll comprising a first roller surface and a first journal;
    a first bearing block assembly comprising a first bearing and a second bearing, wherein the first bearing comprises a first bearing position and the second bearing comprises a second bearing position, and wherein the first journal is disposed within the first bearing block assembly;
    a second calender roll comprising a second roller surface and a second journal;
    a second bearing block assembly comprising a third bearing and a fourth bearing, wherein the third bearing comprises a third bearing position and the fourth bearing comprises a fourth bearing position, and wherein the first and fourth bearings are non-corresponding bearings and the second and third bearings are non-corresponding bearings, wherein the second journal is disposed within the second bearing block assembly;
    a feedback control system configured to exert a first push/pull force between the first and fourth bearings and a second push/pull force between the second and third bearings; and
    a controller in electrical communication with the feedback control system;
    wherein a calendering distance between the first and second roller surfaces defines a calendering nip.

**13.** The system of Claim 12, wherein the feedback control system comprises a hydraulic system, a servo motor system, a magnetic levitation system, a pneumatic system, and combinations thereof.

**14.** The system of Claim 12 or 13, further comprising a bearing sensor in electrical communication with the controller and configured to detect the first and second bearing positions, preferably wherein the bearing sensor comprises a mechanical sensor, an optical sensor, an electromagnetic sensor, a capacitance sensor, or combinations thereof.

**15.** The system of any one of Claims 12-14, further comprising a nip sensor in electrical communication with the controller and configured to detect the calendering distance, preferably wherein the nip sensor comprises a mechanical sensor, an optical sensor, an electromagnetic sensor, a capacitance sensor, a mathematical model, or combinations thereof.

FIG. 1

FIG. 2

FIG. 3A

FIG. 3B

Impact of Adjacent Pull Force

## FIG. 4A

Impact of Gap Pull Force

## FIG. 4B

Impact of Gap Push Force

FIG. 4C

Impact of Adjacent Gap Push Force

FIG. 4D

FIG. 5

Europäisches
Patentamt
European
Patent Office
Office européen
des brevets

# EUROPEAN SEARCH REPORT

**Application Number**

EP 25 20 9182

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 5 097863 B1 (HITACHI ENG SERVICE) 12 December 2012 (2012-12-12) | 1-13 | INV. H01M4/139 |
| Y | * paragraphs [0002], [0018], [0023] - [0024], [0027] - [0028], [0039], [0047], [0056]; figures 3, 5-6 * | 15 | H01M4/04 B30B3/04 B29C43/58 B21B38/10 |
| | ----- | | B29C43/46 |
| X | US 2014/109642 A1 (HACKFORT THOMAS [DE] ET AL) 24 April 2014 (2014-04-24) | 1,3-14 | |
| Y | * paragraphs [0001], [0012], [0024], [0026], [0031]; figures 1-3 * | 15 | |
| | ----- | | |
| Y | CN 106 252 606 A (WUXI LEAD INTELLIGENT EQUIPMENT CO LTD) 21 December 2016 (2016-12-21) * paragraph [0036] * | 15 | |
| | ----- | | |
| Y | JP H06 106240 A (ISHIKAWAJIMA HARIMA HEAVY IND) 19 April 1994 (1994-04-19) * paragraphs [0011], [0019] * | 15 | |
| | ----- | | |

| TECHNICAL FIELDS SEARCHED (IPC) |
|---|
| B29C B21B H01M |

The present search report has been drawn up for all claims

| Place of search | Date of completion of the search | Examiner |
|---|---|---|
| Munich | 16 March 2026 | Monti, Adriano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 9182

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2026

| Patent document cited in search report | | Publication date | Patent family member(s) | | Publication date |
|---|---|---|---|---|---|
| JP 5097863 | B1 | 12-12-2012 | CN | 103050659 A | 17-04-2013 |
| | | | JP | 5097863 B1 | 12-12-2012 |
| | | | JP | 2013099775 A | 23-05-2013 |
| US 2014109642 | A1 | 24-04-2014 | AU | 2012247889 A1 | 14-11-2013 |
| | | | CA | 2834161 A1 | 01-11-2012 |
| | | | DE | 102011018874 B3 | 30-08-2012 |
| | | | EP | 2701858 A1 | 05-03-2014 |
| | | | ES | 2553233 T3 | 07-12-2015 |
| | | | HK | 1195284 A1 | 07-11-2014 |
| | | | JP | 5908064 B2 | 26-04-2016 |
| | | | JP | 2014518951 A | 07-08-2014 |
| | | | PL | 2701858 T3 | 29-02-2016 |
| | | | RU | 2013152646 A | 10-06-2015 |
| | | | US | 2014109642 A1 | 24-04-2014 |
| | | | WO | 2012146226 A1 | 01-11-2012 |
| CN 106252606 | A | 21-12-2016 | NONE | | |
| JP H06106240 | A | 19-04-1994 | NONE | | |

EPO FORM P0459

For more details about this annex : see Official Journal of the European Patent Office, No. 12/82

**REFERENCES CITED IN THE DESCRIPTION**

**Patent documents cited in the description**

- US 92606024